# EUROPEAN PATENT SPECIFICATION

(11) **EP 0 630 778 B1**
(45) Date of publication and mention of the grant of the patent: **10.09.1997**
(21) Application number: 94304132.7
(22) Date of filing: 08.06.1994
(51) Int. Cl.: B60N 2/28, B60R 22/10

(54) **Child safety seat for automobile**
Kindersicherheitssitz für Kraftfahrzeuge
Siège de sécurité pour enfants pour véhicules automobiles

(30) Priority: 16.06.1993 JP 144979/93
(43) Date of publication of application: 28.12.1994
(73) Proprietor: APRICA KASSAI KABUSHIKI KAISHA, Osaka (JP)
(72) Inventor: Kassai, Kenzou, Osaka (JP); Onishi, Ichiro, c/o Aprica Kassai K. K., Osaka (JP)
(74) Representative: Abbie, Andrew Kenneth

(56) References cited:
- EP-A- 0 545 185
- DE-U- 8 802 180
- GB-A- 2 072 489
- US-A- 4 880 277
- US-A- 5 161 855

## Description

The present invention relates to a child safety seat for an automobile.

In general, a child safety seat for an automobile comprises a crotch belt which is locatable between the thighs of a child seated in the seat to upwardly extend from a surface of the seat, and shoulder belts which extend from a backrest portion and are passable along the child's shoulders. A buckle is mounted on an end of the crotch belt so that the shoulder belts may be detachably coupled to the buckle. The safety seat may also comprise hip belts which are passed along the child's hips, to be also detachably coupled to the buckle. The hip belts may be integrally formed with the shoulder belts.

The aforementioned shoulder belts and the like are coupled to the buckle after the child is seated on the child safety seat for an automobile. The shoulder belts and the like are detached from the buckle when the child is helped out from the seat.

Before the child is seated on the aforementioned child safety seat for an automobile, the crotch belt is in an arbitrary state on the seat surface, for example. In other words, the crotch belt may be bent in any form, or twisted. Therefore, the buckle which is mounted on the end of the crotch belt is in any position and any state on the seat surface, for example, while arbitrarily directing its front and back sides.

When the child is seated in this state, the crotch belt and the buckle may be located under the buttocks of the child, causing discomfort. In order to avoid this, the user must separate the crotch belt and the buckle from the seat surface before seating the child, so that the same are not located under its buttocks. If the crotch belt and the buckle are undesirably located under the buttocks of the child, the user must draw out the buckle from under its buttocks with the crotch belt. Such operations are relatively troublesome.

Further, the user must confirm the front and back sides of the buckle are in front of the body of the child, to couple the shoulder belts and the like to the same. However, the crotch belt which is provided with the buckle is so easily twisted to reverse the buckle that the user simply holding the buckle may have to turn over the same for coupling the shoulder belts thereto. In this case, the user must turn over the buckle in a direction for returning the crotch belt as twisted to its original state. This also complicates the operation for coupling the shoulder belts to the buckle.

Even if the buckle is facing in a correct direction, the user may inadvertently couple the shoulder belts to the buckle in a twisted state of the crotch belt. In this case, the crotch belt causes discomfort between the thighs of the seated child. In addition, the crotch belt may injure the body of the child when an impact is applied to the automobile by abrupt braking or the like.

While the crotch belt is adapted to hold the body of the child with the shoulder belts when an impact is applied to the automobile by abrupt braking or the like tending to fling out the child from the safety seat, it is preferable to relieve the body of the child from nipping by the crotch belt at this time.

US-A-4880277 discloses a child safety seat for an automobile comprising: a seat portion providing a seat surface for contact with the buttocks of a child seated on the seat; a backrest portion for supporting the back of the child; a belt-stop mechanism comprising a cushioned pad and a shaft attached to a central portion of the front surface of the seat floor so as to be capable of being erected for locating between the thighs of the child and prostrated, the belt-stop mechanism having belt-stop grooves; and shoulder belts extendable from the backrest portion and passable along the child's shoulders to be detachably coupled to the belt-stop mechanism.

An object of the invention is to overcome or lessen the effects of at least one of the aforementioned problems.

Accordingly, the invention provides a child safety seat for an automobile, comprising:
a seat portion providing a seat surface for contact with the buttocks of a child seated on said seat;
a backrest portion for supporting the back of said child;
a crotch belt locatable between the thighs of said child;
a buckle mounted on an end of said crotch belt;
shoulder belts extendable from said backrest portion and passable along said child's shoulders to be detachably coupled to said buckle;
a cushion member self supportingly upwardly standing from said seat surface along respective back surfaces of said crotch belt and said buckle; and
a flexible cover attached to and covering said crotch belt and said cushion member while exposing at least a part of said buckle such that said crotch belt and said buckle are held along said cushion member with said crotch belt upwardly extending from said seat surface.

The cushion member may comprise foam resin.

The cover may be detachable from said crotch belt and said cushion member.

In order that the invention may be well understood, an embodiment thereof, which is given by way of example only, will now be described with reference to the accompanying drawings, in which:
Fig. 1 is a sectional view showing a buckle assembly provided in a child safety seat for an automobile;
Fig. 2 is a rear elevational view showing a cover for the buckle assembly shown in Fig. 1;
Fig. 3 is a perspective view showing a child safety seat for an automobile comprising the buckle assembly shown in Fig. 1; and
Fig. 4 is a perspective view showing a child seated on the child safety seat for an automobile shown in Fig. 3.

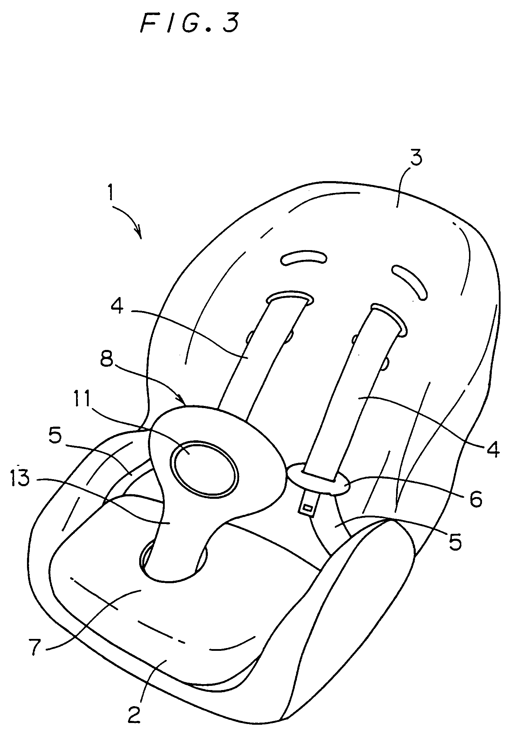

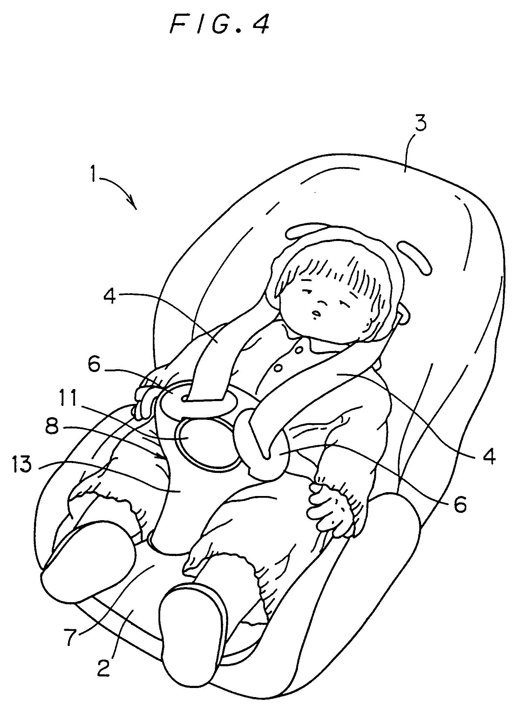

Figs. 3 and 4 are perspective views showing a child safety seat 1 for an automobile. Fig. 3 independently shows the safety seat 1, and Fig. 4 shows a child seated on this safety seat 1.

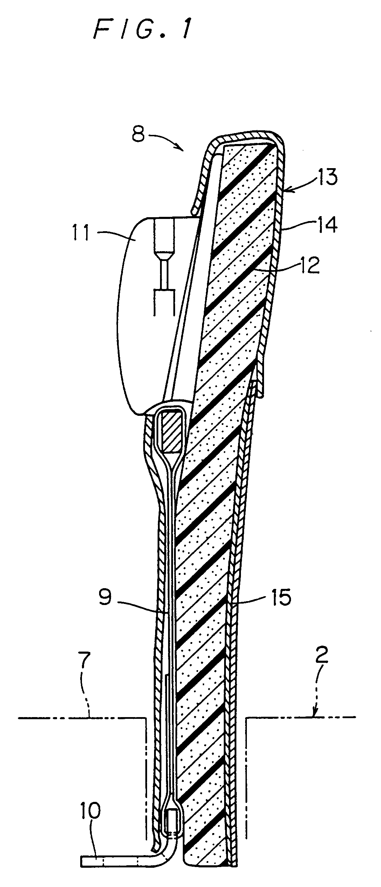

The safety seat 1 comprises a seat portion 2 and a backrest portion 3. Shoulder belts 4 are drawn out, or extended, from the backrest portion 3 to be passed along the shoulders of the child. Hip belts 5 are provided by the same belts as the shoulder belts 4. The belts providing the shoulder and hip belts 4 and 5 are inserted in tongue plates 6. A buckle assembly 8 is provided to upwardly project from a seat surface 7 which is formed on an upper surface of the seat portion 2. Fig. 1 is a sectional view showing this buckle assembly 8.

As shown in Fig. 1, the buckle assembly 8 comprises a crotch belt 9 which upwardly extends from the seat surface 7 shown by a phantom line. A lower end of this crotch belt 9 is fixed to the seat portion 2 by an anchor plate 10. A buckle 11 is mounted on an upper end of the crotch belt 9. As shown in Fig. 4, the aforementioned tongue plates 6 are detachably coupled to this buckle 11, thereby detachably coupling the shoulder and hip belts 4 and 5 to the buckle 11.

A cushion member 12 is provided along back surfaces of the crotch belt 9 and the buckle 11. The cushion member 12 is made of foam resin, for example, with toughness for making the crotch belt 12 self-sustainable. The buckle assembly 8 is covered with a flexible cover 13. This cover 13 exposes only a principal part of the buckle 11, to enable attachment/detachment of the tongue plates 6 to/from the buckle 11.

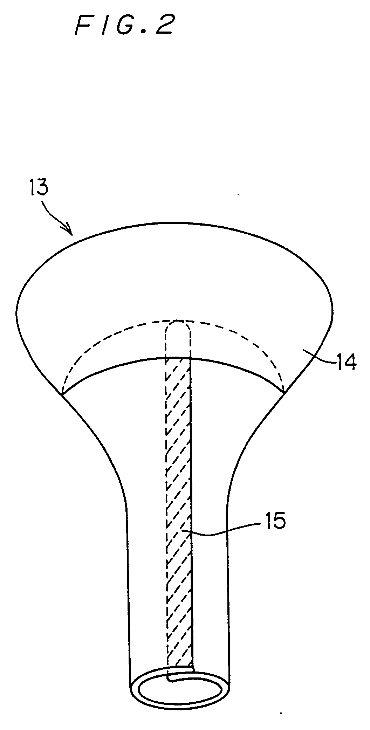

Fig. 2 is a rear elevational view showing the cover 13. The cover 13 comprises a bag portion 14 covering an upper portion of the cushion member 12 and a base portion of the buckle 11. Ends of a cover portion downwardly extending from the bag portion 14 are overlapped with each other on a back side of the cushion member 12, and the overlapped portions 15 are connected with each other by a velcro or burr fastener, for example. Thus, the cover 13 can be easily removed to be washed when the same is soiled, for example.

Due to presence of the cushion member 12, the crotch belt 9 is held by the cover 13 along the cushion member 12 and is brought into a self-sustaining state, whereby the overall buckle assembly 8 enters a self-sustaining, or self-supporting, state. When the child is seated on this safety seat 1, therefore, the buckle 11 is held along the cushion member 12 and maintained in front of the child's body in a correct condition. Thus, it is possible to easily attach/detach the tongue plates 6 to/from the buckle 11. Further, the cushion member 12 relieves the body of the child from nipping which may be caused when an impact is applied to the automobile.

While the safety seat 1 has been described with reference to the drawings, some modifications are also available within the scope of the claims.

While the aforementioned safety seat 1 comprises the hip belts 5, for example, the safety seat may have no such hip belts. Alternatively, the hip belts may be provided by belts which are independent of the shoulder belts.

The child safety seat 1 for an automobile described above comprises a crotch belt 9 which is locatable between the thighs of a child seated on the seat 1 to upwardly extend from the seat surface 7, a buckle 11 which is mounted on an end of the crotch belt 9, and shoulder belts which are passable along the shoulder of the child to be detachably coupled to the buckle 11. A cushion member 12 is provided along back surfaces of the crotch belt 9 and the buckle 11, with toughness to self-supporting upwardly stand from the seat surface 7 for making the crotch belt 9 upwardly extend from the seat surface 7 while the buckle 11 is maintained in a correct position and a correct condition by the cushion member 12.

Therefore, it is possible to avoid the aforementioned complicated operations of separating the crotch belt and the buckle from the seat surface before seating the child, drawing out the crotch belt and the buckle from under the buttocks of the child and correctly directing the buckle in an untwisted state of the crotch belt. When the child is simply seated on the child safety seat 1 for an automobile described herein with reference to the figures, the crotch belt 9 is naturally located between its thighs to position the buckle 11 in front of the child in a proper condition.

Even if the body of the child as seated hits the buckle 11 or the crotch belt 9, deformation caused in the cushion member 12 reduces an impact which may be applied to the child. Even if the cushion member 12 is temporarily deformed, the same returns to the original state on the basis of its elasticity when the child is seated in a prescribed position, to restore the crotch belt 9 and the buckle 11 to proper positions.

As hereinabove described, the buckle 11 is maintained in a proper position and a proper condition after the child is seated, whereby the shoulder belts 4 can be easily coupled to the buckle 11.

Further, the cushion member 12 is positioned along the back surfaces of the crotch belt 9 and the buckle 11. When an impact is applied to the automobile by abrupt braking or the like such that the crotch belt 9 and the buckle 11 may nip the body of the child, it is possible to sufficiently relax this impact by the cushion member 12.

## Claims

1. A child safety seat for an automobile, comprising:
a seat portion (2) providing a seat surface (7) for contact with the buttocks of a child seated on said seat;
a backrest portion (3) for supporting the back of said child;
a crotch belt (9) locatable between the thighs of said child;
a buckle (11) mounted on an end of said crotch belt (9);
shoulder belts (4) extendable from said backrest portion (3) and passable along said child's shoulders to be detachably coupled to said buckle (11);
a cushion member (12) self supportingly upwardly standing from said seat surface (7) along respective back surfaces of said crotch belt (9) and said buckle (11); and
a flexible cover (13) attached to and covering said crotch belt (9) and said cushion member (12) while exposing at least a part of said buckle (11) such that said crotch belt (9) and said buckle (11) are held along said cushion member (12) with said crotch belt (9) upwardly extending from said seat surface (7).

2. A child safety seat for an automobile in accordance with claim 1, wherein said cushion member (12) comprises foam resin.

3. A child safety seat for an automobile in accordance with claim 1 or 2, wherein said cover (13) is detachable from said crotch belt (9) and said cushion member (12).

## Patentansprüche

1. Kinder-Sicherheitssitz für ein Fahrzeug, aufweisend:
einen Sitzabschnitt (2) mit einer Sitzfläche (7) für den Kontakt mit dem Gesäß eines auf dem Sitz sitzenden Kindes,
einen Rückenlehnen-Abschnitt (3) zur Stütze des Rückens des Kindes,
einen Schritt-Gurt (9) zur Anordnung zwischen den Oberschenkeln des Kindes,
eine an einem Ende des Schritt-Gurts (9) angeordnete Schnalle (11),
Schultergurte (4), die aus dem Rückenlehnen-Abschnitt (3) herausziehbar und über die Schultern des Kindes führbar sind, um lösbar mit der Schnalle (11) verbunden zu werden,
ein Kissenelement (12), das von der Sitzfläche (7) entlang der entsprechenden Rückseite des Schritt-Gurts (9) und der Schnalle (11) selbsttragend nach oben steht, und
eine flexible Abdeckung (13), die an dem Schritt-Gurt (9) und dem Kissenelement (12) angebracht ist und diese unter Offenlassen mindestens eines Teils der Schnalle (11) abdeckt, so daß der Schritt-Gurt (9) und die Schnalle (11) entlang des Kissenelements (12) gehalten werden, wobei der Schritt-Gurt (9) von der Sitzfläche (7) aufrecht hervorsteht.

2. Sitz nach Anspruch 1, wobei das Kissenelement (12) ein Schaumharz beinhaltet.

3. Sitz nach Anspruch 1 oder 2, wobei die Abdeckung (13) von dem Schritt-Gurt (9) und dem Kissenelement (12) abnehmbar ist.

## Revendications

1. Un siège de sécurité pour enfant pour un véhicule automobile, comprenant:
une partie de siège (2) fournissant une surface de siège (7) pour le contact avec les fesses d'un enfant assis sur ledit siège;
une partie d'appui du dos (3) pour supporter le dos dudit enfant;
une ceinture d'entrejambes (9) susceptible d'être disposée entre les cuisses dudit enfant;
une boucle (11) montée sur une extrémité de ladite ceinture d'entrejambes (9);
des ceintures d'épaule (4) aptes à être déployées à partir de ladite partie d'appui du dos (3) et aptes à être passées le long des épaules dudit enfant pour être reliées de façon détachable à ladite boucle (11);
un élément coussin (12) à auto-support s'étendant vers le haut à partir de ladite surface de siège (7) le long des surfaces arrière respectives de ladite ceinture d'entrejambes (9) et de ladite boucle (11); et
un couvercle souple (13) fixé à et recouvrant ladite ceinture d'entrejambes (9) et ledit élément coussin (12) tout en exposant au moins une partie de ladite boucle (11) afin que ladite ceinture d'entrejambes (9) et ladite boucle (11) soient maintenues le long dudit élément coussin (12) avec ladite ceinture d'entrejambes (9) se prolongeant vers le haut à partir de ladite surface de siège (7).

2. Un siège de sécurité pour enfant pour un véhicule automobile selon la revendication 1, dans lequel ledit élément coussin (12) comprend une résine alvéolaire.

3. Un siège de sécurité pour enfant pour un véhicule automobile selon la revendication 1 ou 2, dans lequel ledit couvercle (13) est détachable à partir de ladite ceinture d'entrejambes (9) et dudit élément coussin (12).
